Europäisches Patentamt

(19) European Patent Office

Office européen des brevets

(11) Veröffentlichungsnummer: **0 026 296**
A1

## (12) EUROPÄISCHE PATENTANMELDUNG

(21) Anmeldenummer: 80104560.0

(22) Anmeldetag: 01.08.80

(51) Int. Cl.³: **A 01 G 9/24**

(30) Priorität: 29.09.79 DE 2939673
19.02.80 DE 3006083

(43) Veröffentlichungstag der Anmeldung:
08.04.81 Patentblatt 81/14

(84) Benannte Vertragsstaaten:
AT BE CH FR GB IT LI LU NL SE

(71) Anmelder: Gebhardt, Karl, Dipl.-Ing.
Blütenstrasse 16 A
D-8500 Nürnberg 30(DE)

(72) Erfinder: Gebhardt, Karl, Dipl.-Ing.
Blütenstrasse 16 A
D-8500 Nürnberg 30(DE)

(74) Vertreter: Patentanwälte Czowalla . Matschkur +
Partner
Königstrasse 1
D-8500 Nürnberg(DE)

(54) Verfahren zum Betreiben eines Energiespar-Klima- und Regen-Gewächshauses und dieses Klima- und Regen-Gewächshaus.

(57) Verfahren zum Betreiben eines Klima- und Regen-Gewächshauses mit einem giebelförmigen Querschnitt, wobei zwischen zwei in Abstand angeordneten, nach Süden gerichteten Schrägwänden (4,5) unter Einfluss der Sonneneinstrahlung und Wasserzuführung ein Aufstrom feuchter Luft erzeugt und die Feuchtigkeit aus dem anschliessend zwischen zwei in Abstand angeordneten schrägen Rückwänden (12,13) einfallenden Luftstrom kondensiert und einer Einrichtung zur Versorgung, insbesondere zum Beregnen des Innenraums, zugeführt wird.

Die nach Süden gerichtete Schrägwände (4,5) des Gewächshauses sind teilweise mit einem Saugvlies (7,9) belegt.

FIG. 1

**0026296**

**Patentanwälte**

jelassen beim Europäischen Patentamt - admitted to the European Patent Office - agréés près l'Office européen des brevets

Dr. Max Schneider † (1977)
Dr. Alfred Eitel Dipl.-Ing.
Ernst Czowalla Dipl.-Ing. Dipl.-Ldw.
Peter Matschkur Dipl.-Phys.

85 Nürnberg 106, den 28. Juli 1980
Königstraße 1 (Museumsbrücke)
Fernsprech-Sammel-Nr. 20 39 31

**P** Parkhaus Katharinenhof
Parkhaus Adlerstraße

uns.Zch.: 30 362/29-R1.

Dipl.-Kfm. Dipl.-Ing. Karl Gebhardt
Blütenstraße 16 A, 8500 Nürnberg 30
------------------------------------

"Verfahren zum Betreiben eines Energiespar-Klima-
und Regen-Gewächshauses und dieses Klima- und
Regen-Gewächshaus"

Die Erfindung bezieht sich zunächst auf ein Verfahren zum Betreiben eines Energiespar-Klimahauses oder Regen-Gewächshauses mit einem giebelförmigen Querschnitt.

In den gemäßigten Klimazonen bedient man sich, unter beachtlichem Energie-Einsatz, Gewächshäuser, um auch in der kälteren und sonnenscheinärmeren Jahreszeit dem Bedarf entsprechende Frischpflanzen zu erzeugen. Die Einflüsse von Licht, Wärme und Feuchtigkeit werden in einem solchen Gewächshaus in ein möglichst optimales Verhältnis zueinander gebracht, welches den Lebensbedingungen der Nutzpflanzen am besten entspricht. In warmen und heißen Klimazonen besteht der gleiche Bedarf an pflanzlichen Kulturen,die insbesondere der menschlichen Ernährung dienen, zum Teil sogar lebenswichtig sind. Dort sind die Faktoren Licht und Wärme im Übermaß vorhanden, hingegen fehlt es an Wasser. Abwasser, Brackwasser und Salzwasser,die möglicherweise verfügbar sind, können unter den üblichen Bedingungen zum Betrieb von Gewächshäusern keine Verwendung finden. Hinzu kommt, daß in derartigen warmen und heißen Klimazonen neben der Bereitstellung des notwendigen Frischwassers es auch erforderlich ist, eine Klimatisierung im Gewächshaus zu erzielen, um die übermäßig vorhandenen Wärmeangebote zu regulieren. Dabei handelt es sich um ein Gebot, das nicht nur für den Betrieb von Gewächshäusern gilt, sondern allgemein für Häuser in heißen Klimazonen. insbesondere auch für Wohnhäuser, wobei für derartige Wohnhäuser auch das gleiche Bedürfnis nach Erzeugung von Frischwasser aus im allgemeinen überall vorhandenen Abwässern, Brackwasser oder Salzwasser gegeben ist, wie bei den vorstehend angesprochenen Gewächshäusern.

Es besteht deshalb ein beachtliches Bedürfnis danach, diese Probleme einer befriedigenden Lösung zuzuführen, um ein Klima- oder Regen-Gewächshaus zu schaffen, das auch unter ungünstigen Bedingungen mit einem Mindestmaß an Energie und konstruktivem Aufwand einen maximalen Nutzen erbringt, d.h. insbesondere auch mit Hilfe der jeweils vorhandenen Mittel, ein Innenklima für ein Wohnhaus oder ein Gewächshaus erzeugt, das unter Ausnutzung der jeweils gegebenen Voraussetzungen optimale Bedingungen für das Wohnen oder ein Nutzpflanzenwachstum schafft.

Im einen Fall stellt der Energieaufwand die kritische Voraussetzung dar, im anderen Standort ist es das Wasser.

Erfindungsgemäß wird diese Aufgabe dadurch einer sinnvollen und wirksamen Lösung zugeführt, daß bei einem Klima- und Regen-Gewächshaus der eingangs genannten Art zwischen zwei im Abstand angeordneten, nach Süden gerichteten Schrägwänden unter Einfluß der Sonneneinstrahlung und Wasserzuführung ein Aufstrom feuchter Luft erzeugt und die Feuchtigkeit aus dem anschließend zwischen zwei im Abstand angeordneten schrägen Rückwänden einfallenden Luftstrom kondensiert und einer Einrichtung zur Versorgung, beispielsweise zum Beregnen, des Innenraums zugeführt wird.

Ein solches Verfahren arbeitet mit durch Verdunstung gewonnener Feuchtigkeit, so daß nicht nur in den zivilisierten Gebieten zur Verfügung stehendes Frischwasser, sondern auch Abwasser, Brackwasser und schließlich auch Salzwasser zum Betrieb Verwendung finden kann. Die Rückstände können durch von Zeit zu Zeit durchgeführte Reinigung entfernt werden. Der Aufstrom der Luft ergibt sich durch die aus der natürlichen Sonneneinstrahlung gewonnene Erwärmung, wobei die Luftströmung sogleich eine Verdunstung des Wassers herbeiführt. Wird ein solcher feuchtigkeitsbeladener Luftstrom in seinem Gipfelpunkt umgelenkt und an der nach Norden gerichteten Gebäudeseite abgekühlt, so kondensiert das Wasser bei absinkendem Tau. Diese Wirkung kann durch einen entgegengerichteten Frischluftstrom noch verstärkt werden. Das ausfallende Wasser wird gesammelt und der zentralen Hauswasserversorgung oder einer Beregnungseinrichtung im Falle eines Gewächshauses zugeführt.

Es versteht sich von selbst, daß die speziellen Ausgestaltungen der Parameter unterschiedlich sein müssen, je nachdem, ob es in erster Linie um die Erzeugung von Frischwasser bei genügend vorhandenem Wärmeangebot (heißen Zonen) oder vermehrt um die Energiebereitstellung geht, wie es in den gemäßigten Zonen erforderlich ist, oder ob schließlich an Stelle eines Gewächshauses ein Klima-Wohnhaus mit Hilfe des erfindungsgemäßen Verfahrens betrieben werden soll. Bei einem derartigen Klima-Haus kommt es darauf an, einerseits das Überangebot an Wärme zu verarbeiten, d.h. für eine ausreichende Kühlung des Innenraums zu sorgen und andererseits eine möglichst autarke Wasserversorgung unter Ausnutzung von Brackwasser, Brauchwasser oder gegebenenfalls auch Salzwasser zu schaffen.

Die Erfindung befaßt sich darüber hinaus mit der Ausgestaltung eines speziell zur Durchführung des erfindungsgemäßen Verfahrens dienenden Klima- oder Regen-Gewächshauses, welches die entsprechende Aufgabe einer optimalen Lösung zuführt. Sie sieht hierzu vor, daß die im wesentlichen nach Süden gerichtete äußere Schrägwand neben lichtdurchlässigen Abschnitten eine Wärmeabsorptionsfläche aufweist, die zumindest teilweise mit einer mit wasserführenden Kapillaren versehenen Platte, insbesondere einem Saugvlies (Außenvlies) hinterlegt ist, daß die durch einen begehbaren Zwischenraum getrennte innere Schrägwand im Bereich der Wärmeabsorptionsfläche ebenfalls mit einer mit wasserführenden Kapillaren versehenen Platte, insbesondere einem Saugvlies (Innenvlies) belegt ist, die jeweils mit ihrem inneren Ende in einen Wasserbehälter hineinragen und daß beide Wände am oberen Ende je an eine äußere und innere, in Abstand angeordnet, schrägverlaufende, bei Gewächshäusern verglaste, Rückwand anschließen, von denen die innere Rückwand Einrichtungen zum Sammeln von Kondenswasser aufweist, die mit einer Wasserversorgungseinrichtung für den Innenraum, insbesondere einer Beregnungseinrichtung, verbunden sind, wobei der Zwischenraum zwischen Innen- und Außenwänden als Strömungskanal für die Luft dient.

Der zwischen der äußeren und inneren nach Süden gerichteten Wand gebildete Strömungskanal erzeugt unter der von der einfallenden Wärmestrahlung ausgehenden Erwärmung einen aufwärts gerichteten Luftstrom, der sich zum einen von dem Wasserbehälter her mit Feuchtigkeit belädt. Der Hauptanteil der in diesem Strömungskanal transportierten Luftfeuchtigkeit wird jedoch von dem Außenvlies abgegeben, welches in direktem Kontakt mit der äußeren Schrägwand zugeordneten Wärmeabsorptionsfläche steht. Dadurch wird die im Außenvlies durch Kapillarwirkung aufsteigende Feuchtigkeit sehr stark erwärmt, so daß erhebliche Mengen an Wasserdampf an die Luft im Strömungskanal abgegeben werden.

Ein Teil der Feuchtigkeit mit dem die Luft im Strömungskanal beladen wird, stammt auch vom Innenvlies. Dabei ist allerdings die Feuchtigkeitsabgabe vom Innenvlies nicht das Primäre, sondern primär ist an dieser Stelle der Kühleffekt auf die innere Schrägwand und damit auf den Innenraum des Klima- oder Regen-Gewächshauses. Da das Innenvlies mit der in ihm hochsteigenden Flüssigkeit nicht von der Sonne bestrahlt wird, da es ja von der Wärmeabsorptionsfläche abgeschattet wird, wird hier die Verdunstungskälte beim Verdunsten von Flüssigkeit aufgrund des vorbeistreichenden Flüssigkeitsstroms zwischen den Schrägwänden wirksam.

Im Bereich des Firstes fällt der bis zur Sättigung feuchtigkeitsbeladene Luftstrom schließlich in den an der Nordseite des Gebäudes gebildeten Strömungskanal zwischen Außen- und Innenwand ein, wodurch die fehelnde Sonneneinstrahlung niedrigere Temperaturen herrschen, so daß das Wasser zunehmend kondensiert und auf die Innenwand fällt. Diese Wirkung kann noch dadurch unterstützt werden, daß zusätzlich ein Frischluftstrom dem einfallenden warm-feuchten Luftstrom entgegengerichtet wird. DieSchräge der inneren Rückwand ermöglicht das Sammeln des Kondenswassers und seine Ableitung, gegebenenfalls über einen Sammelbehälter zu einer zentralen Wasserversorgungseinrichtung bei einem Klima-Haus bzw. zu einer Beregungseinrichtung bei einem Regen-Gewächshaus.

Die Schrägwände und ihre daran anschließenden Rückwände sollen in Ausgestaltung der Erfindung Teile zweier übereinanderstehender selbständiger, mit getrennten Giebelseiten versehener Häuser bilden, die durch einen zwischen beiden Häusern umlaufenden Wassergraben getrennt sind.

Diese besondere Ausgestaltung des Klima- oder Regen-Gewächshauses mit einem umlaufenden begehbaren Wassergraben hat gegenüber prinzipiell ebenfalls funktionsfähigen Anordnungen mit lediglich doppelwandigen Konstruktionen den entscheidenden Vorteil, daß eine ständige Kontrolle stattfinden kann und daß eine Säuberung von den anfallenden Sedimenten ohne weiteres möglich ist. Gerade beim Einsatz von Brackwasser oder Salzwasser ist es in regelmäßigen Abständen notwendig, die Vliese zu reinigen oder gegebenenfalls teilweise zu ersetzen, was im technischen Betrieb , d.h. abgesehen von Versuchsanlagen, nur dadurch sinnvoll realisiert werden kann, daß der Zwischenraum zwischen den übereinandergestellten Häusern begehbar ist. Dabei ist es auch möglich, die Häuser geometrisch unterschiedlich auszugestalten, d.h, die inneren Wände, insbesondere die nach Süden gerichtete innere Schrägwand,steiler anzuordnen als die äußeren Wände. Auf diese Weise ergibt sich eine Verjüngung des Strömungskanals nach oben und daraus resultierend eine Beschleunigung des Luftumlaufs. Ob es günstiger ist, eine derartige unterschiedliche Neigung der Schrägwände anzuordnen oder aber lieber einen konstanten Strömungsquerschnitt zu wählen, ergibt sich je nach den besonderen Anforderungen (Klima-Haus oder Regen-Gewächshaus) sowie den äußeren Klimabedingungen

Während man bei Klima-Häusern in der Südwand praktisch keine lichtdurchlässigen Abschnitte in den Schrägwänden vorsehen wird und Flächenabschnitte, die für die erfindungsgemäße Funktionsweise nicht mit einer Wärmeabsorptionsfläche belegt zu sein brauchen, eher mit Solarzellen zur Stromversorgung des Hauses belegen wird, sollen die nach Süden gerichteten Schrägwände bei Regen-Gewächshäusern bevorzugt mit einer Verglasung versehen sein, wobei die Verglasung der äußeren Schrägwand mit einer sie teilweise bedeckenden wärmeabsorbierenden Schicht, insbesondere einer an ihrer Innenseite angeordneten Schwarzfolie aus gut wärmeleitendem Material, z.B. Metall, aufweist.

Die Wärmeabsorptionsfläche kann bevorzugt in Streifen auf die dazwischen lichtdurchlässige äußere Schrägwand aufgebracht sein, wobei die Breite der stehenbleibenden lichtdurchlässigen Streifen von den äußeren klimatischen Bedingungen abhängt. In heißen und tropischen Klimazonen, in denen auch bei kleinen lichtdurchlässigen Flächenabschnitten genügend LIcht für das

-7-

Pflanzenwachstum im Inneren des Gewächshauses zur Verfügung steht, kann durch die größere Wärmeabsorptionsfläche und die daraus resultierende stärkere Wasserdampfproduktion dem erhöhten Bedürfnis zur Erzeugung großer Mengen Frichwasser Rechnung getragen werden.

Neben der angesprochenen Verglasung der äußeren Schrägwand liegt es aber auch im Rahmen der Erfindung - isnbesondere bei ihrem Einsatz für Klima-Häuser in tropischen Zonen - daß die nach Süden gerichtete äußere Schrägwand aus Steinplatten, gegebenenfalls mit dunkelfarbigem Gefüge, wie Basalt, Granit, Schiefer o.dgl. besteht. Darüber hinaus kommen auch Metallbleche in Betracht, wie Aluminium oder Kupferblech. Schließlich können auch dunkelbeschichtete Glasflächen als Wärmeabsorptionsfläche dienen.

Die angesprochene wasserführende Innenwand, die der Einfachheit halber vorstehend mit "Innenvlies" und "Außenvlies" bezeichnet worden ist, kann nach einem anderen Merkmal der Erfindung aus einem Traggerüst mit einer Auflage von Matten aus organischem oder anorganischem Fasermaterial, von porösen mineralischen Stoffen, wie z.B. Tuffgesteinen o.dgl. gebildet sein. Es kommt entscheidend darauf an, einerseits die notwendige Kapillarität zu erzeugen, damit, begünstigt durch den aufwärts gerichteten warmen Luftstrom, eine auf Kapillarwirkung beruhende, nach oben gerichtete Wasserführung zustande kommt, um im Falle des Außenvlieses eine möglichst große, mit der Wärmeabsorptionsfläche in Kontakt stehende Vliesfläche zur Verfügung zu haben, von der ausgehend eine Wasserdampfproduktion stattfinden kann. Im Falle des Innenvlieses ist es entscheidend, daß das Wasser ebenfalls genügend weit durch Kapillarwirkung nach oben steigen kann, um eine entsprechend große Fläche zu haben, die durch die entstehende Verdunstungskälte für eine Klimaregulierung im Innenraum, d.h. für eine Kühlung des Innenraums sorgt. Selbstverständlich bestehen hinsichtlich dieser Betriebsfaktoren je nach der Klimazone unterschiedliche Anforderungen, beispielsweise ist die Notwendigkeit der Kühlungdes Innenraums in gemäßigten Breiten erheblich geringer als in tropischen Zonen, so daß demzufolge auch das Innenvlies nicht derart stark nach oben gezogen zu sein braucht wie bei einem Klima- oder Gewächshaus für tropische Länder. Es hat sich in der Praxis aber gezeigt, daß durch die Wärmeeinstrahlung und die Wasserabgabe vom Außenvlies verbunden mit der Luftkonvektion zwischen den Schrägwänden sich als ein derartiges Gleichgewicht einstellt, daß durch die mit stärker werdender Sonneneinstrahlung stärker werdende Strömung und damit auch stärker werdende Verdunstung am Innenvlies letztendlich erreicht wird, daß selbst bei extremen Außenbedingungen die Innentemperatur selbst in einem Gewächshaus, in welchem ja nach wie vor noch eine gewisse Sonneneinstrahlung zum Pflanzenwachstum zugelassen werden muß, niemals über etwa 20°C ansteigt.

Es hat sich weiter als vorteilhaft erwiesen, daß die nach Süden gerichtete Schrägwand in gemäßigten Breiten eine Neigung von ca. 45° zur Horizontalen aufweist. Dies gewährleistet eine besonders günstige Wärmeabsorption vom einfallenden Sonnenlicht. Es liegt im Rahmen der Erfindung, daß die Rückwand eine Neigung von weniger als 45° zur Horizontalen aufweist, womit die Grundfläche des Gewächshauses vergrößert, zum anderen aber auch den Erfordernissen des Sammelns des Kondenswassers Rechnung getragen werden kann. Selbstverständlich kann beispielsweise der untere Teil der Rückwand auch etwa senkrecht verlaufen, um auch die Randzone noch begehbar zu gestalten. Auch im Hinblick auf die Neigung der Schrägwände gilt wiederum das bereits mehrfach genannte Prinzip, daß diese Parameter je nach den äußeren klimatischen Bedingungen unterschiedlich optimiert werden können, d.h. daß für die günstigste Neigung der Süd- und Nord-Schrägwände in den Tropen andere Verhältnisse gelten als in gemäßigten Breiten. Die jeweils optimalen Bedingungen lassen sich jedoch unter Beachtung der erfindungsgemäßen Funktionsprinzipien sehr einfach finden.

Die zum Zwecke der Wartung eines erfindungsgemäßen Klima- oder Regen-Gewächshauses außerordentlich wichtige Ausbildung des Wasserbehälters als umlaufender begehbarer Wassergraben hat zusätzlich eine erhebliche ausgleichende Wirkung hinsichtlich des Betriebs bei Tag und Nacht. Der Wassergraben dient als Wärmereservoir, so daß - wie die Erfahrung gezeigt hat - bei erfindungsgemäßen Regen-Gewächshäusern die Luftkonvektion und die Erzeugung von Frischwasser noch viele Stunden anhält,nachdem bereits die Sonne untergegangen ist. Umgekehrt ergibt sich dabei selbstverständlich auch ein stark dämpfender Effekt beim Betrieb in heißen Klimazonen, bei denen den extrem hohen Tagestemperaturen häufig entsprechend extrem niedrige Nachttemperaturen gegenüberstehen. Im Inneren eines erfindungsgemäßen Klima- oder Regen-Gewächshauses machen sich diese starken Außentemperaturschwankungen aber nur sehr gering bemerkbar. Es hat sich gezeigt, daß ein erfindungsgemäßen Regen-Gewächshaus in gemäßigten Breiten selbst dann noch betrieben werden kann, wenn die Außentemperatur unter 0°C fällt. Lediglich bei Abfall der Außentemperatur unter -5 bis -8°C sollte eine Zusatzheizung vorgesehen werden, wobei es aber ausreicht, eine Zusatzheizung in den Wassergraben einzubringen, damit sich das Wasser nicht zu stark abkühlt und damit der erfindungsgemäße Prozeß derLuftumwälzung und Verdunstung und Abkühlung auch bei tieferen Außentemperaturen und relativ geringer Sonneneinstrahlung noch funktionieren kann.

Ein ganz erheblicher Vorzug der vorliegenden Erfindung besteht darin, daß das System ohne Schläuche, Pumpen o.dgl. arbeitet,und zwar unabhängig davon, ob das erfindungsgemäße System bei Gewächshäusern oder bei Klima-Häusern für heiße Klimazonen angewandt werden soll. Dies ist aber für einen robusten, billigen und wartungsfreien Betrieb von erheblicher Bedeutung.

Außerdem sind, wie die Erfindung weiterhin vorsieht, im Bereich des Fußes der Rückwand Einströmöffnungen für Frischluft in den Strömungskanal zwischen innerer und äußerer Rückwand sowie in den Innenraum des Gewächshauses vorgesehen. Dadurch ist Gewähr dafür geboten, daß selbst in heißem Klima die Frischluft relativ kühl gegenüber dem feuchtigkeitsbeladenen Luftstrom an derSüdwand ist.

In weiterer Ausgestaltung der Erfindung können die jeweils voneinander beabstandeten Giebelseiten durchsetzende, das Innenhaus direkt mit der Außenatmosphäre verbindende Querbelüftungsschächte vorgesehen sein, um ein direktes Austreten von warmer Luft aus dem Innenhaus zu ermöglichen. Bei einem großen Treibhaus oder einem Wohnhaus kann diese Querbelüftungsöffnung gleichzeitig als Begehungsschleuse ausgebildet sein, wobei durch eine derartige Begehungsschleuse auch eine zusätzliche giebelseitige Abschottung der Südseite zur Nordseite stattfindet, so daß die für die erfindungsgemäße Funktion wesentliche Konvektionsströmung in vollem Umfang wirksam werden kann und nicht durch die giebelseitigen Wandzwischenräume nach Art eines "by-pass" kurzgeschlossen wird.

Für den Fall, daß eine stärkere Kühlung der auf der Nordseite einströmenden Frischluft gewünscht oder erforderlich ist,sollte in weiterer Ausgestaltung der Erfindung hierfür vorzugsweise ein als Absorbersystem ohne umlaufende Teile ausgebildetes Kühlsystem, beispielsweise ein Ammoniak-Umlaufgerät,verwendet werden.

Zum Sammeln des Kondenswassers können entweder Sammelbehälter am unteren Ende der Rückwand vorgesehen sein, oder aber diese mit etwa querverlaufenden Sammelrinnen vorgesehen sein, die bei Gewächshäusern vorzugsweise direkt mit einer Beregnungseinrichtung verbunden sind. Diese kann im einfachsten Fall aus Durchbrechungen der inneren Rückwand im Bereich der Sammelrinnen bestehen.

Obgleich durch die Verwendung zweier übereinandergestellter Häuser an Stelle einer doppelwandigen Ausbildung der Schrägflächen nahezu alle Probleme bereits einer befriedigenden Lösung zugeführt werden können, nämlich zum einen ein allzu großer Wärmestau zwischen den Schräglfächen vermieden ist und insbesondere ein "Durchschlagen" der Wärme der Wärmeabsorptionsfläche auf die Innenwand auf der Südseite vermieden ist, darüber hinaus ein Reinigen und Auswechseln der Saugvliese (Innenvlies und Außenvlies) ohne Probleme möglich ist und außerdem auch der Abtransport von Sedimenten (Brauchwasser mit großen Brocken) einfach möglich ist und auch éne Algenbekämpfung ohne Schwierigkeiten stattfinden kann, kann bei extrem verschmutztem Brauchwasser gegebenenfalls die sich einstellende Saughöhe in den dünnen Kapillaren des Vlieses für die optimalen Betriebsbedingungen zu gering sein. In diesen Fällen kann in weiterer Ausgestaltung der Erfindung vorgesehen sein, daß, zumindest teilweise, Brauchwasser auch von oben an die Vliese herangeführt wird.

Der Vollständigkeit halber sei an dieser Stelle darauf hingewiesen, daß selbst bei erfindungsgemäßen Gewächshäusern die Abschottung des unteren Flächenabschnitts der Südwände durch die Wärmeabsorptionsfläche bzw. die Saugvliese eine vollständige Raumausnutzung nicht hindert, da die hinter diesen abgeschotteten Flächenabschnitten liegenden Bereiche im Inneren des Gewächshauses zum einen der Anordnung von Pflanzen dienen können, die wenig Licht brauchen (Nachtschattengewächse), auf der anderen Seite unmittelbar an der nach Süden gerichteten inneren Schrägwand ein Begehungsgang vorgesehen sein kann.

Weitere Vorteile, Merkmale und Einzelheiten der Erfindung ergeben sich aus der nachfolgenden Beschreibung mehrerer Ausführungsbeispiele der Erfindung sowie an Hand der Zeichnung. Dabei zeigen:

Fig. 1 einen schematischen Querschnitt durch ein erfindungsgemäßes Gewächshaus,

Fig. 2 einen Teilquerschnitt durch eine abgewandelte Ausführungsform des Gewächshauses,

Fig. 3 einen Schnitt durch ein erfindungsgemäßes Klima-Haus,

Fig. 4 eine erfindungsgemäß ausgestaltete Traglufthalle und

Fig. 5 - 7 verschiedene Kombinationen erfindungsgemäßer Gewächs- und Klimahäuser.

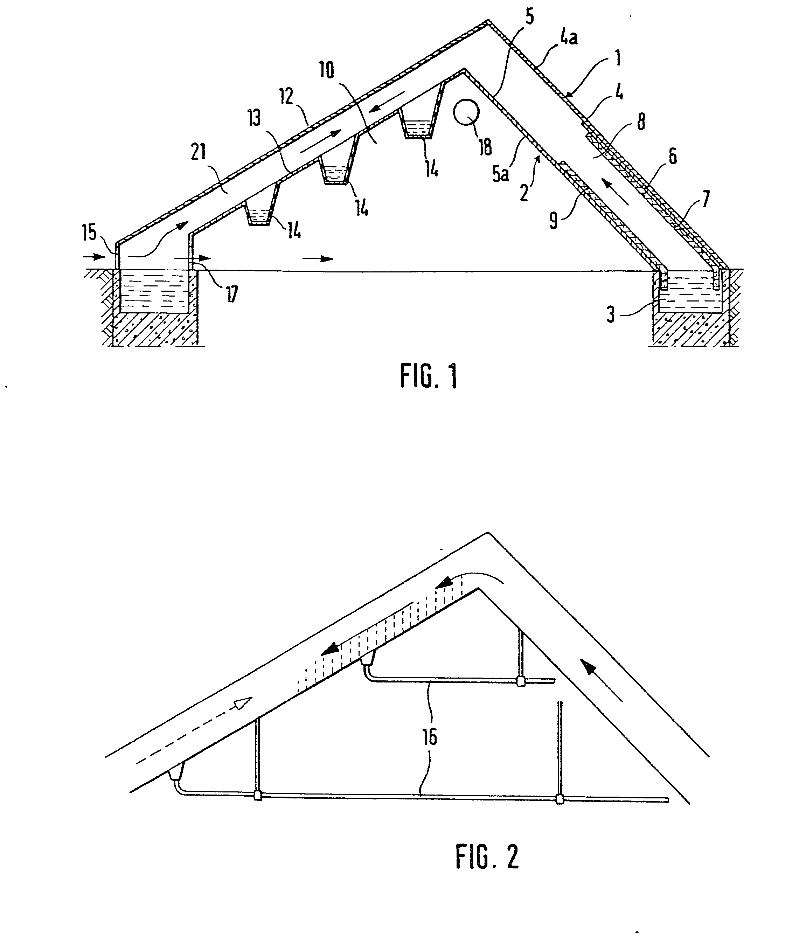

Das Gewächshaus, wie es in Fig.1 dargestellt ist,weist einen unregelmäßigen giebelförmigen Querschnitt auf. Es besteht aus zwei übereinandergestellten Häusern 1 und 2, die durch einen umlaufenden Wassergraben 3 voneinander getrennt sind. Die äußere Schrägwand 4 und die innere Schrägwand 5 sind nach Süden ausgerichtet, also der maximalen Sonneneinstrahlung ausgesetzt. Der Winkel zur Horizontalen beträgt etwa 45 °. Die im dargestellten Ausführungsbeispiel als Glaswand ausgebildete äußere Schrägwand 4 ist im unteren Abschnitt innenseitig mit einer Wärmeabsorptionsfläche 6, beispielsweise einer Metallplatte, hinterlegt, unter der ein Saugvlies,das Außenvlies 7, in gut wärmeleitendem Kontakt zur Wärmeabsorptionsfläche 6 angeordnet ist. Das untere Ende des Außenvlieses 7 ragt in den Wassergraben 3, so daß das darin befindliche Wasser, bei dem es sich auch um Abwasser, Brackwasser oder gar Salzwasser handeln kann, im Außenvlies aufsteigt und sich an der stark erwärmten Wärmeabsorptionsfläche 2 erwärmt und in großen Mengen verdampt. Der Wasserdampf wird von der im Kanal zwischen der äußeren Schrägfläche 4 und der inneren Schrägfläche 5 erwärmten Luft, die in Richtung des eingezeichneten Pfeils nach oben strömt, aufgenommen und zum Gipfelpunkt der übereinandergestellten Häuser transportiert. Bei dieser Luftströmung erfolgt darüber hinaus eine Wasserverdunstung an einer zweiten unmittelbar auf der inneren Schrägwand angeordneten,mit wasserführenden Kapillaren versehenen Platte,Innenvlies 9, welches mit seinem Ende ebenfalls in den Wassergraben 3 hineinhängt.Durch diese Verdunstung erfolgt eine Kühlung der Innenwand 5 und damit eine entsprechende Regulierung des Raumklimas im Innenraum 10 des Gewächshauses. Die weder von der Wärmeabsorptionsfläche 6 noch dem Innenvlies 9 bedeckten oberen Abschnitte der äußeren Schrägwand 4 bzw. der Innenschrägwand 5, die beide im Falle eines Gewächshauses aus Glas bestehen, dienen dem Sonneneinfall, um die notwendige Sonneneinstrahlung für das Pflanzenwachstum in Inneren des Gewächshauses zu gewährleisten. Selbstverständlich ist es nicht erforderlich, daß die Wärmeabsorptionsfläche und die Vliese den unteren Abschnitt der Wände 4 und 5 bedecken, sondern sie könnten auch in Längsstreifen aufgebracht sein,die von oben nach unten durchgehen und durch Zwischenräume getrennt sind, in denen das Licht durch beide Wände 4 und 5 in das Gewächshaus gelangen kann.

Das Ausmaß der Flächenbedeckung mit der Wärmefolie sowie die Größe der Vliese 7 und 9 richtet sich im wesentlichen nach den äußeren klimatischen Bedingungen. In gemäßigten Breiten wird die Wärmeabsorptionsschicht nicht so weit hochgezogen, damit ein genügender Lichteinfall für das Pflanzenwachstum bestehen bleibt.Außerdem ist das einfallende Licht selbstverständlich auch wichtig für die Erwärmung des Innenraums des Gewächshauses. In heißen Zonen wird man die Außenwand sehr viel weitgehender mit einer Wärmeabsorptionsschicht abdecken und auch entsprechend größere Saugvliese vorsehen, um einerseits eine geringere Licht- und Wärmeeinstrahlung ins Gewächshaus zu haben. Auf der anderen Seite wird durch die dadurch vergrößerte Fläche sowohl des Außenvlieses als auch des Innenvlieses einmal mehr Wasser produziert und eine höhere Verdunstungskälte und damit eine stärkere Kühlung des Gewächshausinneren erzielt. Diese Verhältnisse werden weiter unten noch ausführlicher beschrieben werden.

Im Bereich des Firstes schließt an die nach Süden gerichteten Schrägwände 4 und 5 der beiden Häuser 1 und 2 jeweils eine nach Norden gerichtete schräge Rückwand 12 bzw. 13 an, deren

-14-

Neigungswinkel zur Horizontalen etwa 30° beträgt. Der Fußabschnitt beider Rückwände 12 und 13 verläuft senkrecht, um auch die Randbereiche im Norden des Gewächshauses noch bearbeiten zu können. Die Rückwaände 12 und 13 können, brauchen jedoch nicht unbedingt verglast sein, da üblicherweise das durch die freibleibenden oberen Zonen der nach Süden weisenden Wände 4 und 5 einfallende Sonnenlicht für das Pflanzenwachstum ausreicht. In der inneren Rückwand 13 sind bei dem in Fig. 1 dargestellten Ausführungsbeispiel Rinnen 14 eingearbeitet, die zum Sammeln des Kondenswassers dienen, welches sich dadurch bildet, daß die zwischen den Schrägwänden 4 und 5 aufsteigende feuchtigkeitsbeladene Luft, die im Firstbereich umgelenkt wird und zwischen den Rückwänden 12 und 13 nach unten strömt, infolge der ihr durch Belüftungsöffnungen 15 entgegenströmenden Außenluft abgekühlt wird. Das in den Rinnen 14 sich sammelnde Kondenswasser kann entweder durchBodenöffnungen der Rinnen oder auch durch anschließende, die Anbaufläche im Gewächshaus überdeckende Regenrinnen 16 mit Wasseraustrittsbohrungen (vgl. Fig. 2) auf die Pflanzen aufgebracht werden. Der Abstand zwischen den Wänden 4 und 5 sowie 12 und 13 sowie auch der Abstand zwischen den in den Zeichnungen nicht erkennbaren Giebelwänden der Häuser 1 und 2 ist so groß, daß ein begehbarer Gang entsteht, der es ermöglicht, die Saugvliese zu kontrollieren und zu reinigen oder auszuwechseln oder anfallende Sedimente im Wassergraben zu entfernen oder aber auch die unvermeidliche Algenbildung wirk-sam zu bekämpfen. Der umlaufende Wassergraben 3 zwischen den übereinandergestellten Häusern 1 und 2 braucht dabei selbstverständlich nicht den gesamten Zwischenraum auszufüllen, sondern es kann noch zusätzlich ein seitlicher Sockelstreifen vorgesehen sein, um den Zwischenraum trockenen Fußes begehen zu können.

Es liegt im Rahmen der Erfindung, zur Verbesserung der Abkühlung des zwischen den beiden Südwänden aufwärtsgerichteten feuchtwarmen Luftstroms, d.h. zur Förderung der die Kondensation bewirkenden Abkühlung an der Nordseite, in den Wandzwischenräumen ein Absorbersystem anzubringen, dessen Verdampferseite an der Südseite des Gewächshauses, gegebenenfalls auch außerhalb desselben angeordnet ist, während das Kühlgitter in dem Wandzwischenraum zwischen den Wänden 12 und 13 an der Nordseite unterbebracht ist. Ein Teil der an der Nordseite durch die Belüftungsöffnungen 15 zuströmenden Frischluft gelangt direkt durch Lüftungsöffnungen 17 der inneren Rückwand 13 in den Innenraum 10 des Gewächshauses. Darüber hinaus können bevorzugt auch noch die jeweils einander benachbarten Giebelwände der Häuse 1 und 2 durchsetzende Querbelüftungskanäle 18 vorgesehen sein, so daß erwärmte Luft aus dem Inneren des Gewächshauses unmittelbar an die Außenatmosphäre abgegeben werden kann, und zwar bevorzugt unmittelbar unter dem First, wo sich die Warmluft sammelt.

Der sich durch die Zwischenschaltung eines begehbaren umlaufenden Wassergrabens zwischen den übereinandergestellten Häusern 1 und 2 ergebende relativ große Abstand zwischen den nach Süden gerichteten Schrägwänden 4 und 5 hat zusätzlich die Folge, daß kein Wärmestau zwischen diesen Wänden besteht, wie es der Fall wäre, wenn es sich nur um eine Doppelwand mit wenigen Zentimetern Abstand handeln würde. Außerdem kann auf diese Weise die von der Wärmeabsorptionsfläche 6 ausgehende Wärme nicht unmittelbar auf die Innenwand 2 durchschlagen, d.h. nicht eine zusätzliche Aufheizung des Gewächshauses bewirken. Je heißer es ist, desto mehr erwärmt sich die Wärmeabsorptionsfolie 6 und desto mehr Wasser wird im Außenvlies 7 verdampft. Umgekehrt wird dabei durch die stärkere Erwärmung der Luft im Kanal 8 eine größere Luftströmung erzeugt, die wiederum dazu führt, daß am Innenvlies 9 mehr Wasser verdampft, wodurch eine entsprechend größere Verdunstungskälte erzeugt wird, die für eine Kühlung der Innenwand 5 und damit des Innenraums 10 des Gewächshauses sorgt. Auf diese Weise spielt sich ein Gleichgewicht ein, welches dazu führt, daß auch bei stärkster Sonnen-

-16-

strahlung und hohen Außentemperaturen die Temperatur im Gewächshaus niemals über 30°C ansteigt. Die durch die Wärmeabsorptionsfläche 6 bzw. die Saugvliese 7 und 9 abgeschatteten Bereich im Innern des Gewächshauses dienen zur Aufnahme von Nachtschattengewächsen mit geringem Lichtbedarf, so daß sich trotz dieser Abschattung die Gewächshausfläche optimal ausnutzen läßt.

Während die Sonnenwärme und Sonnenstrahlung in der Zeit der größten Hitze über die Vliese 7 und 9 in den Wassergraben mit abgeleitet wird, erwärmt sich das Wasser im Wassergraben 3, wodurch die Verdunstung im Innenvlies 9 größer wird und damit auch die der Kühlung des Innenraums 10 des Gewächshauses dienende Verdunstungskälte entsprechend ansteigt. Auch auf diese Weise ergibt sich wiederum eine wirksame Regelung, die dafür sorgt, daß im Innern des Gewächshauses die Temperaturen nicht zu stark ansteigen. Umgekehrt führt die Erwärmung des Wassers im umlaufenden Wassergraben 3 zu einem wirksamen Ausgleich zwischen Tag und Nacht. Auf der einen Seite geht die Wasserdampfproduktion und das daraus resultierende Beregnen des Innenraums noch stundenlang weiter, wenn die Sonne bereits untergegangen ist. Auf der anderen Seite ist das große Wasserreservoir des Wassergrabens 3 ein guter Wärmepuffer. Die erfindungsgemäße Funktionsweise eines Regen-Gewächshauses bringt es mit sich, daß es sogar bei Temperaturen unter 0°C noch ohne Heizung funktionsfähig ist, wobei lediglich bei Temperaturen unterhalb von etwa -5°C es zweckmäßig ist, eine kleine Zusatzheizung vorzusehen, die dabei am besten als Zusatzheizung für das Wasser im Wassergraben 3 ausgelegt ist. Man kann also erfindungsgemäße Gewächshäuser nach Art von Kalttreibhäusern (Gemüseanbau) den ganzen Winter über auch in unseren nördlichen Breiten ohne jegliche Energiezufuhr betreiben. Selbst bei Warmtreibhäusern bedarf es gegenüber den bisherigen Systemen nur einer sehr viel geringeren zusätzlichen Energie, die - wie vorstehend ausgeführt - nur zu starken Frostzeiten bereitgestellt zu werden braucht. Ein erfindungsgemäßes Regen-Gewächshaus arbeitet vollkommen automatisch, auch mit automatischer Beregung, benötigt keinerlei Verteilungsschläuche oder Pumpenanlagen, kann aus den verschiedensten Materialien - anstelle einer Verglasung der Wände könnten auch Metall- oder Steinplatten eingesetzt werden - bestehen. Darüber hinaus läßt sich ein erfindungsgemäßen Gewächshaus sehr einfach, d.h. sogar in Selbsthilfe, herstellen und es liefert aufgrund seines funktionsbedingten Regelungsmechanismus ein gemäßigtes Klima, welches äußere Temperaturschwankungen weitestgehend ausgleicht.

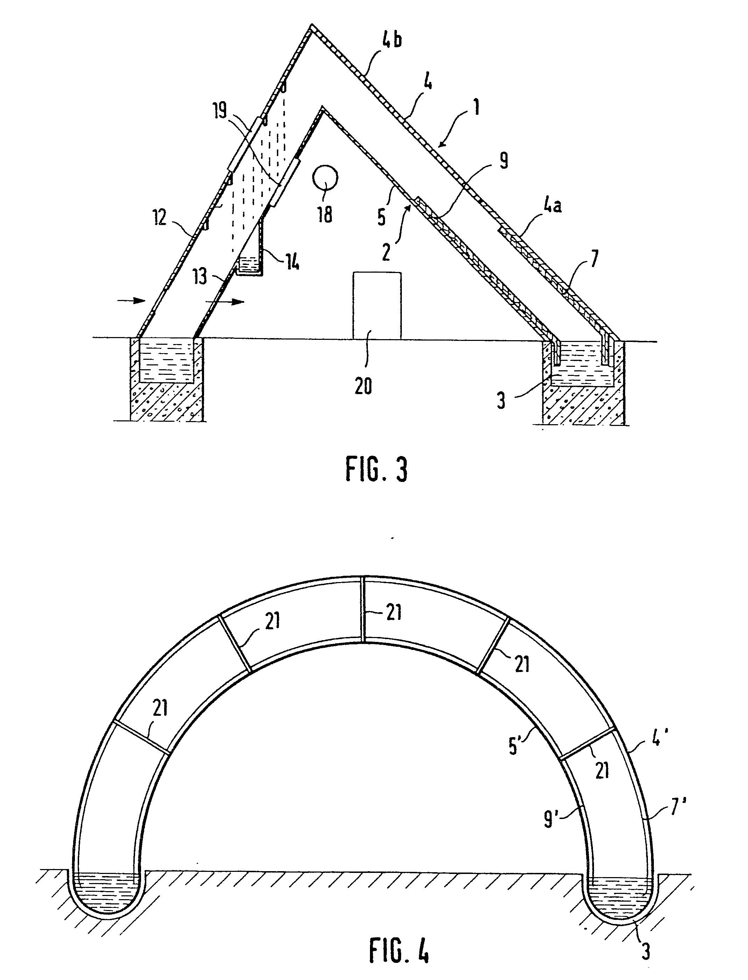

Das Prinzip des in den Figuren 1 und 2 dargestellten Regengewächshauses läßt sich auch auf ein Wohnhaus für heiße Klimazonen übertragen, wie es an Hand der Fig. 3 schematisch dargestellt ist. In diesem Fall ist die Neigung der Wände 4 und 5 bzw. 12 und 13 der übereinandergestellten Häuser gerade umgekehrt wie in gemäßigten Breitenzonen, d.h. die Südwände sind flacher geneigt als die Nordwände. Die Südwände sind dabei bevorzugt völlig ohne Fenster ausgeführt, wobei die unteren Abschnitte 4a die Wärmeabsorptionsflächen aufweisen oder diese unmittelbar selbst bilden, indem sie aus entsprechenden Steinplatten bestehen. In sehr heißen Zonen kann dabei -dies gilt insbesondere auch für Gewächshäuser - statt einer dunklen Schwarzfolie die Wärmeabsorptionsfläche hell, beispielsweise direkt durch das weiße Saugvlies, gebildet sein, damit überschüssige Wärme reflektiert wird. Die nicht benötigten oberen Abschnitte 4b können mit Solarzellen belegt sein, um die elektrische Betriebsenergie des Hauses zu erzeugen. Das auf der Nordseite erzeugte, im Kanal 14 gesammelte Kondenswasser dient der Wasserversorgung des Hauses, ausgehend von im Wassergraben 3 enthaltendem Abwasser oder gar Salzwasser, welches selbst in trockenen Klimazonen fast überall zur Verfügung steht. Bei dem in Fig. 3 dargestellten Ausführungsbeispiel sind lediglich schematisch auf der Nordseite Fenster 19 dargestellt. Die Funktionsweise ist praktisch die gleiche wie bei dem vorstehend ausfürhlich beschriebenen Regen-Gewächshaus gemäß den Fig. 1 und 2, d.h. durch die auf die Südwand auftreffende Sonnenwärme wird aus dem Brackwasser im umlaufenden Wassergraben 3 einerseits Wasserdampf erzeugt, der durch Kondensation die Wasserversorgung des Hauses sicherstellt, andererseits ergibt sich eine Verdunstung am Innenvlies 9, welches eine wirksame Kühlung des Inneren des Hauses gewährleistet. Bei 20 ist schließlich eine Eingangsschleuse zwischen Außenhaus 1 und Innenhaus 2 angedeutet.

Fig. 4 zeigt einen Querschnitt durch ein als Traglufthalle ausgestaltetes erfindungsgemäßes Klima- oder Regengewächshaus. Die Außenwand 4' und die Innenwand 5' bestehen dabei aus einer transparenten, zu einer geschlossenen Gebilde verschweißten Plastikfolie. Zwischen beiden Wänden 4' und 5' erstrecken sich Abstandsstäbe 21, die hohl ausgebildet mit Ventilen zum Druckausgleich zwischen innen und außen sowie zur Querbelüftung versehen sein können. Im Fundament ist lediglich der Graben 3 vorzusehen. Das Wasser wird unmittelbar in die verschweißte Folienkonstruktion eingebracht und bildet damit gleichzeitig die Verankerung, d.h. die Folie braucht überhaupt nicht gesondert starr mit dem Boden verbunden zu werden. Bei 7' bzw. 9' sind die weiter vorne bereits ausführlich beschriebenen Saugvliese angedeutet, die bis in das Wasser im Graben 3 hängen. Gemäß einem weiteren Merkmal der Erfindung soll nicht, wie bei üblichen Traglufthallen, ein Überdruck im Innern der Halle gegenüber dem äußeren Atmosphärendruck vorgesehen sein, sondern es wird stattdessen ein Überdruck zwischen den Außen- und Innenwänden 4' und 5' erzeugt. Dies hat den Vorteil, daß keine Druckschleusen an den Eingängen vorgesehen werden müssen und daß die Aufrechterhaltung des die Halle aufgespannt haltenden Druckes erheblich einfacher ist.

Die erfindungsgemäße Tragluftkonstruktion läßt sich sowohl als Treibhaus, als auch für klimageregelte Großraumlagerhallen, Sporthallen, insbes. Tennishallen, verwenden.

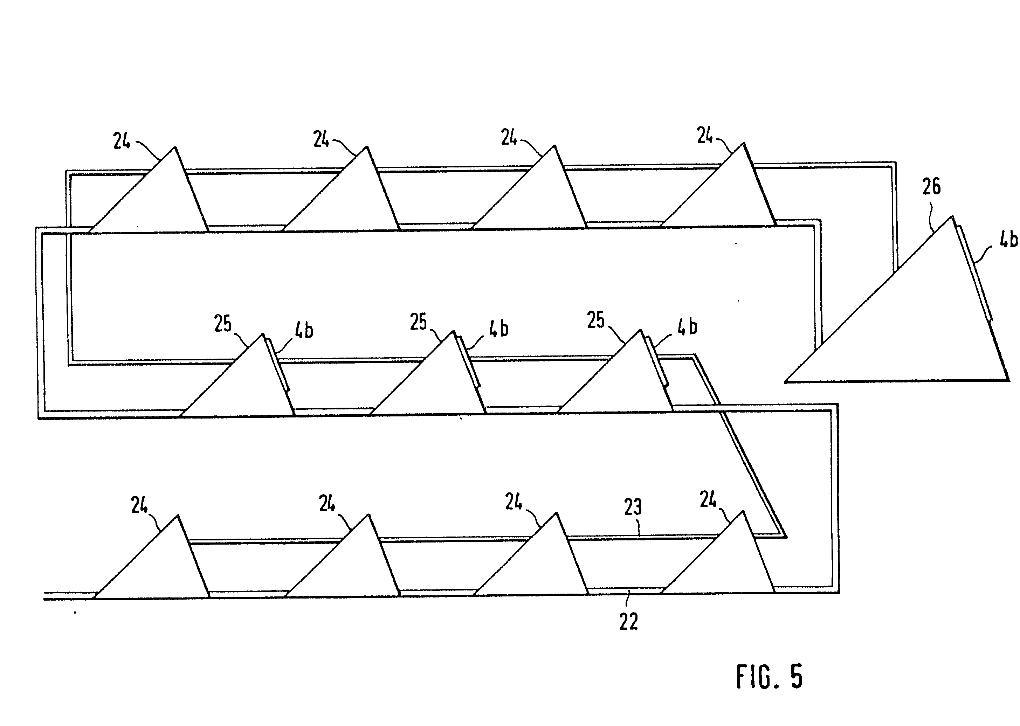

Die Fig. 5 zeigt eine schematische Zusammenstellungszeichnung für einen möglichen Siedlungsbau insbesondere für Entwicklungsländer mit Wohnhäusern, Gewächshäusern und Gemeinschaftsbauten. Bei 22 ist dsabei eine Ringversorgungsleitung mit Salz- oder Brackwasser angedeutet, während 23 eine Frischwasserleitung bezeichnet. Diese Leitungen verbinden die Gewächshäuser 24 mit den Wohnhäusern 25 und dem schematisch angedeuteten Gemeinschaftsbau 26, wobei diese Wohnhäuser 25 und 26 an den aufgesetzten Solarzellen 4b erkennbar sind.

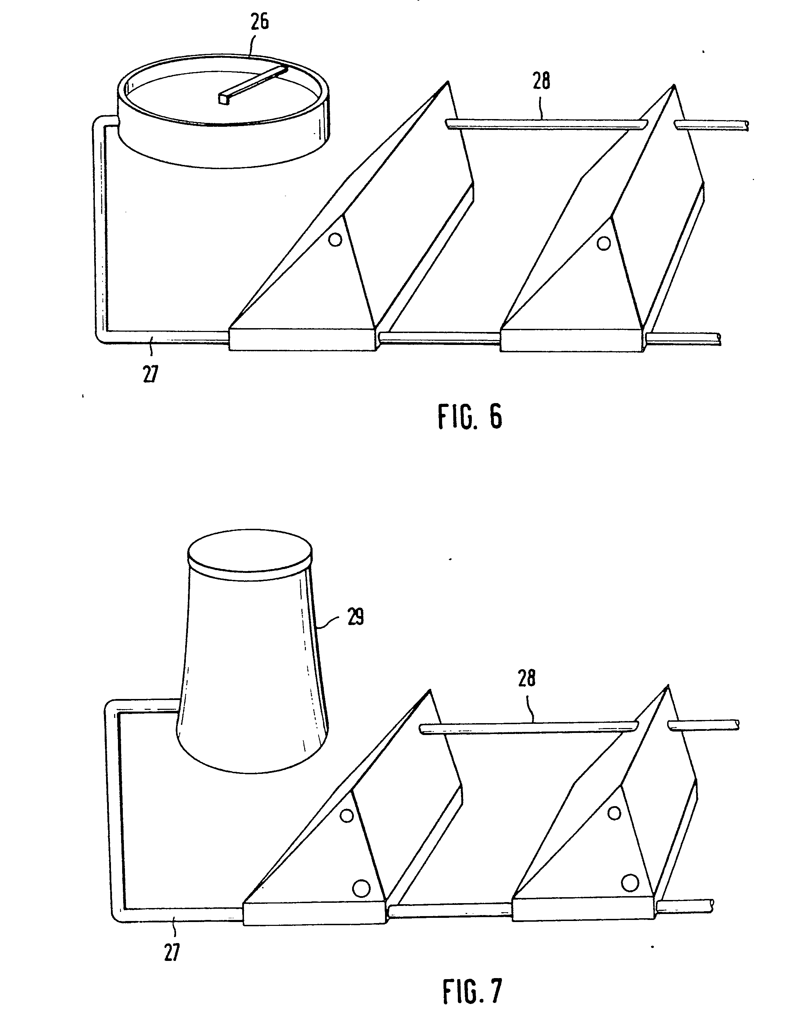

Fig. 6 zeigt die Möglichkeit der Kombination erfindungsgemäßer Regengewächshäuser mit Kläranlagen, wobei die schematisch anhand eines einzelnen Klärbeckens 26 angedeutete Kläranlage das vorgereinigte Oberflächenwasser über die Rohrleitung 27 in die Gräben zwischen die beiden übereinandergestellten Häuser des Gewächshauses liefert. Bei 28 ist die gemeinsame Frischwasserleitung der Gewächshäuser angedeutet. In ähnlicher Weise wie bei Fig. 6 an Hand einer Kläranlage angedeutet ist, lassen sich erfindungsgemäße Regengewächshäuser auch besonders günstig in Verbindung mit Kühltürmen 29 von Industrieanlagen oder Elektrizitätswerken verwenden. Durch die erhöhte Temepratur des über die Leitung 27 ankommenden, in die Gräben der doppelwandigen Häuser gelangenden Kühlwasser ergibt sich ein besonders hoher Wirkungsgrad der Klima- und Regengewächshäuser, gekoppelt einmal mit einer erhöhten Frischwasserversorgung, die anderweitig genutzt werden kann, und darüb-er hinaus,ohne daß das Kühlwasser mit erheblichen hohen Temperaturen wieder in die Natur, insbesondere einen Fluß abgegeben werden muß, was bekanntlich zu erheblichen ökologischen Problemen führt.

Die Erfindung ist nicht auf die dargestellten Ausführungsbeispiele beschränkt. Es liegt auf der Hand, daß sich ein erfindungsgemäßes Klima- oder Regen-Gewächshaus auch ohne vom Erfindungskern abzuweichen in vielfältig unterschiedlicher Weise ausgestalten läßt. Darüber hinaus läßt es sich auch für Freibad- und sonstige Überdachungen verwenden.

Patentansprüche:

1. Verfahren zum Betreiben eines Energiespar-Klima- und Regen-Gewächshauses mit einem giebelförmigen Querschnitt, dadurch gekennzeichnet, daß zwischen zwei in Abstand angeordneten, nach Süden gerichteten Schrägwänden unter Einfluß der Sonneneinstrahlung und Wasserzuführung ein Aufstrom feuchter Luft erzeugt und die Feuchtigkeit aus dem anschließend zwischen zwei in Abstand angeordneten schrägen Rückwänden einfallenden Luftstrom kondensiert und einerEinrichtung zur Versorgung, insbesondere zum Beregnen des Innenraums, zugeführt wird.

2. Energiespar-Klima- oder Regen-Gewächshaus zur Durchführung des Verfahrens nach Anspruch 1, dadurch gekennzeichnet, daß die im wesentlichen nach Süden gerichtete äußere Schrägwand (4) neben lichtdurchlässigen Abschnitten (4a) eine Wärmeabsorptionsfläche (6) aufweist, die zumindest teilweise mit einer mit wasserführenden Kapillaren versehenen Platte, insbesondere einem Saugvlies (Außenvlies 7) hinterlegt ist, daß die durch einen begehbaren Zwischenraum (8) getrennte innere Schrägwand (5) im Bereich der Wärmeabsorptionsfläche (6) ebenfalls mit einem mit wasserführenden Kapillaren versehenen Platte, insbesondere einem Saugvlies (Innenvlies 9) belegt ist, die jeweils mit ihrem internen Ende in einen Wasserbehälter (3) hineinragen und daß beide Wände (4, 5) am oberen Ende je an eine äußere und innere, in Abstand angeordnete, schräg verlaufende, bei Gewächshäusern verglaste, Rückwand (12, 13)anschliessen, von denen die innere Rückwand (13) Einrichtungen (14) zum Sammeln von Kondenswasser aufweist, die mit einer Wasserversorgungseinrichtung für den Innenraum (10), insbesondere einer Beregnungseinrichtung, verbunden sind,wobei der Zwischenraum zwischen Innen- und Außenwänden (4, 5; 12, 13) als Strömungskanal (8, 21) für die Luft dienen.

3. Klima oder Regen-Gewächshaus nach Anspruch 1, dadurch gekennzeichnet, daß die inneren Wände (5, 13) steiler angeordnet sind als die äußeren Wände (4, 12).

4. Klima- oder Regen-Gewächshaus nach Anspruch 2 oder 3, dadurch gekennzeichnet, daß die Schrägwände (4, 5) und ihre daran anschließenden Rückwände (12, 13) Teile zweier übereinanderstehender selbständiger, mit getrennten Giebelseiten versehener Häuser (1, 2) bilden.

5. Klima- oder Regen-Gewächshaus nach einem der Ansprüche 2 bis 4, dadurch gekennzeichnet, daß der Wasserbehälter (3) ein zwischen beiden Häusern umlaufender Wassergraben ist.

6. Klima- oder Regen-Gewächshaus nach einem der Ansprüche 2 bis 5, dadurch gekennzeichnet, daß die nach Süden gerichtete äußere Schrägwand (4) eine Verglasung mit einer sie teilweise bedeckenden wärmeabsorbierenden Schicht (6), insbesondere einer an ihrer Innenseite angeordneten Schwarzfolie aus gut wärmeleitendem Material, z.B. Metall, aufweist.

7. Klima- oder Regen-Gewächshaus nach einem der Ansprüche 2 bis 6, dadurch gekennzeichnet, daß die äußere Schrägwand (4) teilweise mit Solarzellen belegt ist.

8. Klima- oder Regen-Gewächshaus aus einem der Ansprüche 2 bis 7, dadurch gekennzeichnet, daß die Wärmeabsorptionsfläche (6) in Streifen auf die dazwischen lichtdurchlässige äußere Schrägwand (4) aufgebracht ist.

9. Klima- oder Regen-Gewächshaus nach einem der Ansprüche 2 bis 8, gekennzeichnet durch eine Zusatzheizung im Wasserbehälter (3).

10. Klima- oder Regen-Gewächshaus nach einem der Ansprüche 2 bis 9, dadurch gekennzeichnet, daß die nach Süden gerichteten Wände (4, 5) eine Neigung von ca 45° zur Horizontalen aufweisen.

11. Klima- oder Regen-Gewächshaus nach einem der Ansprüche 2 bis 10, dadurch gekennzeichnet, daß die Rückwände (12,13) eine Neigung von weniger als 45° zur Horizontalen aufweisen.

12. Klima- oder Regen-Gewächshaus nach einem der Ansprüche 2 bis 11, dadurch gekennzeichnet, daß im Bereich des Fußes der Rückwände (12, 13) Einströmöffnungen (15, 17) für Frischluft in den Strömungskanal (21) sowie in den Innenraum (10) vorgesehen sind.

13. Klima- oder Regen-Gewächshaus nach einem der Ansprüche 2 bis 12, gekennzeichnet durch eine die jeweils voneinander beabstandeten Giebelseiten durchsetzende, das Innenhaus (2) mit der Außenatmosphäre verbindende Querbelüftungsschächte (18).

14. Klima- oder Regen-Gewächshaus nach Anspruch 12 oder 13, gekennzeichnet durch eine, vorzugsweise als Absorbersystem ohne umlaufende Teile (Ammoniak-Umlaufgerät) ausgebildetes, Kühlvorrichtung für die nordseitig zuströmende Frischluft.

15. Klima- oder Regen-Gewächshaus nach einem der Ansprüche 2 bis 14, dadurch gekennzeichnet, daß die innere Rückwand (13) etwa quer verlaufende Sammelrinnen (14) für das Kondenswasser aufweist, die bei Gewächshäusern mit der Beregnungseinrichtung (16) verbunden sind.

16. Klima- oder Regen-Gewächshaus nach einem der Ansprüche 2 bis 15, dadurch gekennzeichnet, daß unter der inneren Rückwand (13) Sammelbehälter für das Kondenswasser angeordnet sind.

17. Klima- oder Regen-Gewächshaus nach einem der Ansprüche 2 bis 16, gekennzeichnet durch Einrichtungen, um Wasser von oben an das Außenvlies (7) bzw. Innenvlies (9) heranzuführen.

18. Klima- oder Regen-Gewächshaus nach einem der Ansprüche 2 bis 17, dadurch gekennzeichnet, daß die Beregungseinrichtung aus Durchbrechungen in der inneren Rückwand (13) besteht.

FIG. 1

FIG. 2

FIG. 3

FIG. 4

FIG. 5

0026296

FIG. 6

FIG. 7

**0026296**

Nummer der Anmeldung

EP 80 10 4560

Europäisches Patentamt

# EUROPÄISCHER RECHERCHENBERICHT

## EINSCHLÄGIGE DOKUMENTE

| Kategorie | Kennzeichnung des Dokuments mit Angabe soweit erforderlich der maßgeblichen Teile | betrifft Anspruch |
|---|---|---|
| | <u>DE - A - 2 626 902</u> (FREILÄNDER)<br>* Seite 3, Absatz 4 bis Seite 6, Absatz 1; Figuren 1,2 * | 1,2 |
| | -- | |
| | <u>US - A - 4 125 963</u> (JOHNSON)<br>* Spalte 2, Zeile 14 bis Spalte 3, Zeile 48; Figur 1 * | 1,2 |
| | -- | |
| | <u>FR - A - 1 168 575</u> (CENTRE NATIO-NAL DE LA RECHERCHE SCIENTIFIQUE)<br>* Das ganze Dokument * | 1 |
| | -- | |
| | <u>GB - A - 1 443 517</u> (UK ATOMIC ENERGY AUTHORITY)<br>* Das ganze Dokument * | 1 |
| | ---- | |

### KLASSIFIKATION DER ANMELDUNG (Int Cl )

A 01 G 9/24

### RECHERCHIERTE SACHGEBIETE (Int. Cl.³)

A 01 G 9/24

### KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Grunden angeführtes Dokument

&: Mitglied der gleichen Patent-familie, ubereinstimmendes Dokument

Der vorliegende Recherchenbericht wurde fur alle Patentansprucne erstellt

| Recherchenort | Abschlußdatum der Recherche | Pruler |
|---|---|---|
| Den Haag | 06-01-1981 | HERYGERS |

EPA form 1503.1   06.78